# EUROPÄISCHE PATENTSCHRIFT

(11) **EP 3 309 412 B1**
(45) Veröffentlichungstag und Bekanntmachung des Hinweises auf die Patenterteilung: **23.02.2022**
(21) Anmeldenummer: 17195859.8
(22) Anmeldetag: 11.10.2017
(51) Int. Cl.: F16B 23/00, F16B 41/00, F16B 43/00

(54) **SICHERHEITSSCHRAUBE FÜR HYGIENEANWENDUNGEN**
SAFETY SCREW FOR HYGIENE APPLICATIONS
VIS DE SÉCURITÉ POUR APPLICATIONS HYGIÉNIQUES

(30) Priorität: 14.10.2016 DE 102016220108
(43) Veröffentlichungstag der Anmeldung: 18.04.2018
(73) Patentinhaber: NovoNox KG, 71706 Markgröningen (DE)
(72) Erfinder: Leuze, Jürgen, 72172 Sulz am Neckar (DE)
(74) Vertreter: Kohler Schmid Möbus Patentanwälte

(56) Entgegenhaltungen:
- EP-A2- 1 923 581
- WO-A1-2015/191435
- DE-A1-102011 120 724
- US-A- 2 770 998

## Beschreibung

Die Erfindung betrifft eine Schraube für Hygieneanwendungen mit einem Schraubenkopf und mit einem Schaft, der einen Gewindeabschnitt trägt, wobei der Schraubenkopf eine Auflagefläche aufweist, die dem Gewindeabschnitt zugewandt ist, und wobei der Schraubenkopf von dem Gewindeabschnitt abgewandt eine Außenkontur in Form einer Kugelkappe mit mehreren Rücknehmungen aufweist.

Eine solche Schraube ist aus dem Produktdatenblatt "Kugelkopfschraube im Hygienic DESIGN" der Anmelderin, abgerufen von "http://www.novonox.com/doc/de/de/did.102112/80-130_Datasheet_16888_Kugelkopfschraube_im_Hygienic_DESIGN--de.pdf" am 06.07.2016, bekannt.

Bei Maschinen und Anlagen, die in hygienisch sensiblen Bereichen eingesetzt werden, etwa bei der Lebensmittelherstellung/-verarbeitung oder in der pharmazeutischen/chemischen Industrie, ist darauf zu achten, dass sich keine Verschmutzungen wie beispielsweise Produktrückstände ablagern können, bzw. dass allfällige Verschmutzungen leicht und gründlich entfernt werden können. Es sind daher Spalten, Toträume und andere unzugängliche Bereiche durch konstruktive Maßnahmen zu vermeiden, da sich in diesen Verschmutzungen ablagern können und von dort nur schwer wieder entfernt werden können. Bei Schraubverbindungen ist daher insbesondere eine geeignete Gestaltung der Schraubenköpfe erforderlich.

Die genannte Kugelkopfschraube im Hygienic Design weist einen flachen Kugelkopf auf, der nur geringfügig über ein zu befestigendes Bauteil übersteht. Als Antrieb sind zwei gegenüberliegende, parallel zueinander verlaufende Rücknehmungen im Kugelkopf vorgesehen, die mit einem Maulschlüssel erfasst werden können. Durch die flache und abgerundete Gestaltung des Schraubenkopfs wird die Gefahr der Schmutzanhaftung verringert und die Reinigung vereinfacht.

Verschiedentlich besteht der Wunsch, eine Schraubverbindung vor unbefugter Betätigung, insbesondere unbefugtem Lösen, zu sichern. Im Bereich der Hygieneanwendungen betrifft dies beispielsweise die Befestigung von Abdeckungen, von Überwachungsvorrichtungen wie Lichtschranken oder von Sicherheitsschaltern.

Aus dem Wikipedia-Artikel "Sicherheitsschraube" (https://de.wikipedia.org/wiki/Sicherheitsschraube), abgerufen am 06.07.2016, sind verschiedene Schraubenkopfantriebe für sogenannte Sicherheitsschrauben bekannt geworden. Diese Schraubenkopfantriebe erfordern zur Betätigung ein spezielles, nicht allgemein gebräuchliches Werkzeug. Dadurch wird eine unbefugte Betätigung zumindest erschwert. Die Antriebskontur dieser Schraubenkopfantriebe wird im Allgemeinen durch speziell geformte Ausnehmungen im Schraubenkopf gebildet. Typischerweise ist für den Eingriff eines Spezialwerkzeugs eine Innenkontur der Ausnehmung mit einer Mehrzahl von schmalen und/oder spitz zulaufenden und/oder verzweigten Ausformungen gestaltet. Diese Schraubenkopfantriebe für Sicherheitsschrauben eignen sich folglich nicht für den Einsatz in hygienisch sensiblen Bereichen, da die Gefahr der Ablagerung von Verunreinigungen in für Reinigungszwecke schlecht zugänglichen Bereichen besteht.

In der DIN 22424 ist eine Dreikantschraube beschrieben, deren Kopf einen Bund aufweist, von dem ein dreikantiges Prisma als Antriebskontur in Richtung einer Längsachse der Schraube abragt. Aufgrund der rechtwinkligen Übergänge von dem Bund in die Seitenflächen des Prismas und wegen der großen Höhe der Seitenflächen eignet sich diese Schraube nicht für Hygieneanwendungen. Weiterhin kann bei dieser Schraube eine Zange an einer der Seitenflächen und der gegenüberliegenden Kante des Prismas angesetzt werden, so dass ein Schutz vor unbefugter Betätigung nicht hinreichend gegeben ist. Zur Verbesserung des Schutzes vor unbefugter Betätigung werden solche Schrauben daher typischerweise so eingebaut, dass der Kopf in einer zylindrischen Ausnehmung versenkt ist, deren Durchmesser nur geringfügig größer ist als ein Durchmesser des Bundes der Dreikantschraube. Zur Betätigung ist dann ein schlankes Spezialwerkzeug erforderlich. Bei dieser Einbausituation besteht aber eine erhöhte Gefahr der Verschmutzung und eine gründliche Reinigung ist praktisch unmöglich.

### Aufgabe der Erfindung

Es ist die Aufgabe der vorliegenden Erfindung, eine Schraube anzugeben, die in hygienisch sensiblen Bereichen eingesetzt werden kann, und die einen Schutz vor unbefugter Betätigung bietet.

### Kurze Beschreibung der Erfindung

Diese Aufgabe wird erfindungsgemäß gelöst durch eine Schraube mit den Merkmalen von Anspruch 1.

Die Rücknehmungen dienen als Werkzeugangriffskonturen zum Ansetzen eines Werkzeugs an dem Schraubenkopf. Durch die drei um 120° zueinander versetzten Rücknehmungen kann die Schraube nicht mit Standardwerkzeugen wie Gabelschlüsseln oder Sechskantringschlüsseln bedient werden. Der geneigte Kugelkappenabschnitt verhindert das Ansetzen von Zangen; diese rutschen am geneigten Kugelkappenabschnitt ab, wenn versucht wird, die Zange an einer der Rücknehmungen anzusetzen. Zum Betätigen der Schraube ist ein Spezialwerkzeug erforderlich. Die Schraube kann mithin als eine Sicherheitsschraube bezeichnet werden.

Durch die Gestaltung der Außenkontur des Schraubenkopfs in Form einer Kugelkappe eignet sich die Schraube für Hygieneanwendungen. Die flache, abgerundete Form verringert die Verschmutzungsanfälligkeit und erlaubt eine einfache Reinigung.

Durch die Erhöhung der Anzahl der Rücknehmungen auf drei kann auch die Drehmomenteinleitung in den Schraubenkopf gegenüber der gattungsbildenden Schraube mit zwei Schlüsselflächen verbessert werden, da mehr Kontaktstellen zur Krafteinleitung zur Verfügung stehen. Zudem wird ein Spezialwerkzeug durch die um 120° zueinander rotierten Rücknehmungen bezüglich der Längsachse der Schraube zentriert, was das Anziehen/Lösen der erfindungsgemäßen Schraube weiter vereinfacht, da die Gefahr des Abrutschens des Werkzeugs deutlich verringert wird. Beim Einsatz in Umgebungen mit erhöhten hygienischen Anforderungen ist ein Abrutschen des Werkzeugs zu vermeiden, da beim Abrutschen regelmäßig Kratzer und/oder lokale plastische Verformungen an dem Schraubenkopf zurückbleiben, an denen schwer zu entfernende Verschmutzungen anhaften können.

Der zwischen zwei Rücknehmungen verbleibende Kugelkappenabschnitt, der wenigstens 45° gegenüber der Längsachse der Schraube geneigt ist, trennt diese Rücknehmungen in Umfangsrichtung voneinander, so dass diese nicht direkt ineinander übergehen. Dadurch wird sichergestellt, dass zwischen den Rücknehmungen eine geneigte Fläche verbleibt, an der Standardwerkzeuge wie Zangen nicht angesetzt werden können. Zu einem Scheitelpunkt der Kugelkappe hin nimmt die Neigung des Kugelkappenabschnitts stetig zu. Die minimale Neigung des Kugelkappenabschnitts zwischen den Rücknehmungen beträgt wenigstens 45°. Die (minimale) Neigung des Kugelkappenabschnitts zwischen den Rücknehmungen gegenüber der Längsachse beträgt vorzugsweise jeweils wenigstens 50°, besonders bevorzugt jeweils wenigstens 55°. Dadurch wird das Ansetzen einer Zange weiter erschwert.

Übergänge von den Rücknehmungen in die Kugelkontur der Kugelkappe sind vorzugsweise abgerundet ausgeführt, insbesondere mit einem Radius von wenigstens 0,5 mm. Dies verbessert die Eignung der Schraube für Hygieneanwendungen weiter.

Die Auflagefläche ist vorzugsweise plan ausgebildet und senkrecht zu der Längsachse ausgerichtet. Alternativ kann die Auflagefläche keglig oder ballig ausgeführt sein, insbesondere wobei die Längsachse der Schraube eine Symmetrieachse für die Auflagefläche bildet.

Weiter ist vorgesehen, dass die Rücknehmungen mit je einer Hauptangriffsfläche, die parallel zu der Längsachse ausgerichtet ist, weiterhin mit je einer Grundfläche und mit je einer Übergangskontur zwischen der Hauptangriffsfläche und der Grundfläche ausgebildet sind. Von den Hauptangriffsflächen definierte Hauptangriffsebenen schließen jeweils paarweise einen Winkel von 60° ein. Die Drehmomenteinleitung in den Schraubenkopf kann über die Hauptangriffsflächen und die Übergangskonturen erfolgen. Typischerweise werden vorrangig die Hauptangriffsflächen belastet, da deren Orientierung parallel zur Längsachse ein Ausheben des Werkzeugs vermeidet. Die Übergangskonturen vermitteln einen hygienegerechten Übergang von den Hauptangriffsflächen in die Grundflächen. Die Übergangskonturen können bei der Drehmomenteinleitung mit belastet werden, um Kontaktflächenpressungen zwischen einem Werkzeug und dem Schraubenkopf zu verringern. Drei um 120° zueinander versetzte derartige Rücknehmungen können im Vergleich zu einer Schraube mit einer größeren Anzahl an Rücknehmungen länger gestaltet werden ohne direkt ineinander überzugehen. Es können somit über drei Rücknehmungen ungefähr gleich große Drehmomente eingeleitet werden wie bei einer größeren Anzahl von kleineren Rücknehmungen. Die Übergangskontur der Rücknehmungen ist jeweils eine

Ausrundung, vorzugsweise mit einem Ausrundungsradius von wenigstens 0,5 mm. Die Grundflächen sind vorzugsweise senkrecht zu der Längsachse ausgerichtet. In vorteilhafter Weiterbildung dieser Ausführungsform ist vorgesehen, dass eine Kopfhöhe des Schraubenkopfs wenigstens dem 1,3-fachen, bevorzugt wenigstens dem 1,4-fachen, und höchstens 2,2-fachen, bevorzugt höchstens dem Doppelten, eines axialen Abstands der Grundflächen von einem Scheitelpunkt der Kugelkappe entspricht. Bei dieser Dimensionierung wird ein flacher, aber ausreichend stabiler Schraubenkopf erhalten. Zudem können die Rücknehmungen tief genug (in axialer Richtung entlang der Längsachse) für die Einleitung üblicher Drehmomente ausgeführt werden. Die Kopfhöhe des Schraubenkopfs wird entlang der Längsachse von der Auflagefläche aus bis zum Scheitelpunkt der Kugelkappe gemessen. Der Scheitelpunkt der Kugelkappe beschreibt den in axialer Richtung der Längsachse am weitesten von der Auflagefläche des Schraubenkopfs entfernten Punkt der Kugelkappe. Der Scheitelpunkt liegt typischerweise auf der Längsachse.

Eine bevorzugte Ausführungsform ist dadurch gekennzeichnet, dass eine Breite des Kugelkappenabschnitts zwischen den Rücknehmungen wenigstens einer axialen Tiefe der Rücknehmungen entspricht. Dies erschwert das Ansetzen von Zangen an dem Schraubenkopf weiter. Ein breiter Kugelkappenabschnitt vereinfacht auch die Reinigung des Schraubenkopfs. Die axiale Tiefe der Rücknehmungen beschreibt die größte Erstreckung der Rücknehmungen parallel zu der Längsachse. Die Breite des Kugelkappenabschnitts entspricht dem minimalen Abstand zweier Rücknehmungen voneinander. Die Breite des Kugelkappenabschnitts entspricht vorzugsweise höchstens einem Gewindeaußendurchmesser (Nenndurchmesser) des Gewindeabschnitts, um die Rücknehmungen nicht zu klein werden zu lassen.

Bevorzugt ist auch eine Ausführungsform, bei der vorgesehen ist, dass ein Außendurchmesser des Schraubenkopfs wenigstens dem Dreifachen, bevorzugt wenigstens dem 3,5-fachen, und höchstens dem 4,5-fachen, bevorzugt höchstens dem Vierfachen eines radialen Abstands der Rücknehmungen von der Längsachse entspricht. Die Rücknehmungen werden mithin etwa mittig zwischen der Längsachse und einem Außenumgang des Schraubenkopfs angeordnet, so dass eine ausreichende Länge (quer zur Längsachse der Schraube) und axiale Tiefe der Rücknehmungen gewährleistet werden können. Der Außendurchmesser des Schraubenkopfs ist der größte Durchmesser des Schraubenkopfs, gemessen senkrecht zur Längsachse. Der Abstand der Rücknehmung von der Längsachse wird senkrecht zu der Längsachse, d.h. radial zu der Längsachse, gemessen und beschreibt die jeweils kleinste Entfernung einer der Rücknehmungen von der Längsachse. Der Außendurchmesser des Schraubenkopfs entspricht typischerweise wenigstens dem Doppelten und höchstens dem 4-fachen, bevorzugt höchstens dem Dreifachen, besonders bevorzugt höchstens dem 2,5-fachen eines Gewindeaußendurchmessers des Gewindeabschnitts.

Bei einer vorteilhaften Ausführungsform entspricht ein Außendurchmesser des Schraubenkopfs wenigstens dem Dreifachen, bevorzugt wenigstens dem 3,5-fachen und höchstens dem 4,5-fachen, bevorzugt höchstens dem Vierfachen einer Kopfhöhe des Schraubenkopfs. Der Schraubenkopf wird dadurch angemessen flach ausgeführt, ohne seine Stabilität zu gefährden. Gleichzeitig bleibt der Schraubenkopf ausreichend dick, um die Rücknehmung tief genug in axialer Richtung für eine adäquate Drehmomenteinleitung ausführen zu können.

Ferner ist eine Ausführungsform vorteilhaft, bei der ein Außendurchmesser des Schraubenkopfs wenigstens dem 1,2-fachen, bevorzugt wenigstens dem 1,3-fachen und höchstens dem 1,7-fachen, bevorzugt höchstens dem 1,6-fachen, besonders bevorzugt höchstens dem 1,5-fachen eines Kappenradius der Kugelkappe entspricht. Dadurch wird erreicht, dass die Kugelkappe nahe des Außenumfangs des Schraubenkopfs flach verläuft, ohne den Kappenradius übermäßig groß werden zu lassen. Ein zu großer Kappenradius würde größere (in radialer Richtung weiter eingeschnittene) und damit hygienisch nachteilige Rücknehmungen erfordern.

Weiterhin ist eine Ausführungsform vorteilhaft, bei der ein Kappenradius der Kugelkappe wenigstens dem Doppelten, bevorzugt wenigstens dem 2,5-fachen, und höchstens dem 3,5-fachen, bevorzugt höchstens dem Dreifachen, einer Kopfhöhe des Schraubenkopfs entspricht. Bei diesen Verhältnissen kann der Schraubenkopf bei der Reinigung relativ leicht abgewischt werden, da er sich nur flach über eine Umgebung erhebt. Gleichzeitig bleibt eine für die notwendige Stabilität ausreichende Kopfhöhe erhalten.

Erfindungsgemäß ist vorgesehen, dass zwischen der Auflagefläche und der Kugelkappe ein abgerundeter Außenübergang mit einem Außenübergangsradius ausgebildet ist, insbesondere wobei ein Kappenradius der Kugelkappe wenigstens dem 14-fachen, bevorzugt wenigstens dem 16-fachen, und höchstens dem 22-fachen, bevorzugt höchstens dem 20-fachen, des Außenübergangsradius entspricht. Zunächst vermeidet der abgerundete Außenübergang eine scharfe Kante am Außenumfang des Schraubenkopfs. Ferner kann sich an dem abgerundeten Außenübergang eine unter der Auflagefläche anzuordnende Dichtscheibe spaltfrei und stufenlos an dem abgerundeten Außenübergang anlegen. Zwischen dem abgerundeten Außenübergang und den Rücknehmungen ist ein durchgängig umlaufender Kugelkappenstreifen ausgebildet. Die Rücknehmungen werden somit durch den Kugelkappenstreifen von dem Außenübergang abgegrenzt. Dies erhöht einen axialen Abstand zwischen dem Außenübergang und den Rücknehmungen, d.h. insbesondere den Grundflächen der Rücknehmungen. Dadurch kann das Ansetzen einer Zange an dem Außenübergang und einer der Rücknehmungen verhindert werden. Die Zange müsste derart verkippt werden, dass sie die Rücknehmung nur oberseitig (zu dem Scheitelpunkt der Kugelkappe hin) berührt. Beim Versuch mit der derart angesetzten Zange die Schraube zu betätigen, würde die Zange am oberseitigen Übergang der Rücknehmung, insbesondere von deren Hauptangriffsfläche, in die Kugelkappe abrollen und vom Schraubenkopf abrutschen.

Eine bevorzugte Ausführungsform ist dadurch gekennzeichnet, dass an der Auflagefläche ein Bund an dem Schraubenkopf ausgebildet ist, der einen zu der Längsachse konzentrischen Zylinderabschnitt und einen abgerundeten Innenübergang zwischen dem Zylinderabschnitt und der Auflagefläche aufweist, insbesondere mit einem Innenübergangsradius von wenigstens 0,2 mm. Über den Zylinderabschnitt und/oder den Innenübergang kann eine unterhalb der Auflagefläche anzuordnende Dichtscheibe relativ zu dem Schraubenkopf zentriert werden. Der Zylinderabschnitt des Bunds weist typischerweise einen Zylinderdurchmesser auf, der geringfügig kleiner ist als der Gewindeaußendurchmesser des Gewindeabschnitts; insbesondere kann der Zylinderdurchmesser bis zu 2,5 % kleiner sein als der Gewindeaußendurchmesser. Alternativ kann der Zylinderdurchmesser auch größer, insbesondere höchstens 1,5 % größer, als der Gewindeaußendurchmesser sein.

Bei einer vorteilhaften Weiterbildung dieser Ausführungsform ist vorgesehen, dass zwischen dem Bund und dem Gewindeabschnitt ein Freistich an dem Schaft ausgebildet ist. Durch den Freistich wird sichergestellt, dass allein der Bund (und nicht auch der Gewindeabschnitt) die Dichtscheibe zentriert. Zugleich kann durch den Freistich vermieden werden, dass an einer dem Schraubenkopf zugewandten Kante einer Durchgangsausnehmung eines zu befestigenden Bauteils Lastspitzen auftreten.

Erfindungsgemäß ist vorgesehen, dass eine Oberfläche des Schraubenkopfs einen Mittenrauwert Ra von höchstens 0,8 µm, bevorzugt von höchstens 0,4 µm, besonders bevorzugt von höchstens 0,1 µm, aufweist. Die Eignung der Schraube für einen Einsatz bei erhöhten Hygieneanforderungen wird dadurch weiter verbessert. Durch die besonders glatten Oberflächen wird die Schmutzanhaftung reduziert und die Reinigung wird vereinfacht. Derart kleine Mittenrauwerte lassen sich z.B. durch Schleifen oder Läppen, insbesondere Polierläppen, mit entsprechender Sorgfalt erreichen. Auch können Polierverfahren nach WO 2014/166 677 A1 angewandt werden. Die Oberfläche des Schraubenkopfs umfasst die Kugelkappe mit den Rücknehmungen, den abgerundeten Außenübergang und die Auflagefläche. Gemäß einer bevorzugten Ausführungsform ist die Schraube aus einem rostfreien Edelstahl, bevorzugt einem austenitischen rostfreien Edelstahl, besonders bevorzugt X2CrNiMo17-12-2 (Werkstoffnummer 1.4404), gefertigt. Diese Werkstoffe sind beständig gegen übliche Reinigungsmittel und Umgebungsmedien. Der Werkstoff X2CrNiMo17-12-2 entspricht insbesondere der einschlägigen FDA-Vorschrift und der EN 1935/2004.

In den Rahmen der vorliegenden Erfindung fällt ferner ein Montagesystem umfassend eine Schraube und ein Werkzeug für die Schraube mit den Merkmalen von Anspruch 14.

Dadurch kann eine Drehmomentübertragung von dem Werkzeug auf die Schraube gleichzeitig sowohl über die Hauptabtriebsflächen auf die Hauptangriffsflächen als auch über die Anschlusskonturen auf die Übergangskonturen erfolgen. Dies trägt dazu bei die maximalen, lokal auftretenden Flächenpressungen zwischen dem Werkzeug und dem Schraubenkopf zu verringern. Um ein Ausheben des Werkzeugs aufgrund der Drehmomentübertragung von den Anschlusskonturen auf die Übergangskonturen zu vermeiden, wird üblicherweise das Werkzeug bei Betätigung gegen den Schraubenkopf gedrückt, d.h. in axialer Richtung zu den Grundflächen hin. Die Bodenkonturen des Werkzeugs liegen dann typischerweise an den Grundflächen an. Das Werkzeug ist vorzugsweise in der Art eines Ring- oder Steckschlüssels ausgebildet, insbesondere mit einem Schoneinsatz, an dem die Abtriebskonturen ausgebildet sind. Der Schoneinsatz ist aus einem weicheren Material als die Schraube gefertigt, z.B. Aluminium oder Kunststoff. Dadurch können Werkzeugabdrücke auf der Schraube vermieden werden.

Weiterhin in den Rahmen der Erfindung fällt ein Befestigungssystem nach Anspruch 15.

Mittels der Dichtscheibe kann eine dichte Verbindung zwischen dem Schraubenkopf und einem zu befestigenden Bauteil erreicht werden. Beim Andrücken der Dichtscheibe gegen die Auflagefläche der Schraube wird der Dichtkörper der Dichtscheibe vorzugsweise derart verformt (zusammengedrückt), dass er radial außen spaltfrei an dem abgerundeten Außenübergang des Schraubenkopfs anliegt. Vorzugsweise liegt der Dichtkörper andererseits auch spaltfrei an einem Bauteil, in das die Schraube einragt, an. Die Tragscheibe begrenzt dabei das Zusammendrücken des Dichtkörpers, so dass dieser definiert verformt wird. Im verspannten Zustand vermittelt die Tragscheibe den Kraftfluss zwischen dem Schraubenkopf und dem Bauteil. Durch die Zentrierung der Dichtscheibe relativ zu dem Schraubenkopf mittels des Bundes und vorzugsweise des Innenübergangs kann erreicht werden, dass der Dichtkörper in Umfangsrichtung umlaufend durchgängig spaltfrei und vorzugsweise stufenlos an dem abgerundeten Außenübergang des Schraubenkopfs anliegt. Dadurch kann ein glatter und dichter Übergang von dem Schraubenkopf zu dem Bauteil eingerichtet werden. Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine erfindungsgemäße Schraube in schematischer perspektivischer Darstellung bei Ansicht schräg auf den Schraubenkopf;
- Fig. 1b: die Schraube von Fig. 1a bei Ansicht schräg unter den Schraubenkopf;
- Fig. 1c: die Schraube von Fig. 1a in einer schematischen Seitenansicht, bei Blickrichtung entlang einer Rücknehmung im Schraubenkopf;
- Fig. 1d: die Schraube von Fig. 1a in einer schematischen Seitensicht, bei Blick auf einen Kugelkappenabschnitt zwischen zwei Rücknehmungen;
- Fig. 1e: eine Aufsicht auf den Schraubenkopf der Schraube von Fig. 1a;
- Fig. 2a: ein Werkzeug für ein erfindungsgemäßes Montagesystem in einer schematischen perspektivischen Ansicht;
- Fig. 2b: das Werkzeug von Fig. 2a bei Blick auf eine Stirnseite;
- Fig. 2c: das Werkzeug von Fig. 2a in einer Schnittdarstellung entlang Ebene A-A gemäß Fig. 2b;
- Fig. 2d: das Werkzeug von Fig. 2a in einer Schnittdarstellung entlang Ebene B-B gemäß Fig. 2b;
- Fig. 3a: eine Dichtscheibe für ein erfindungsgemäßes Befestigungssystem in einer schematischen perspektivischen Darstellung;
- Fig. 3b: die Dichtscheibe von Fig. 3a im Querschnitt.

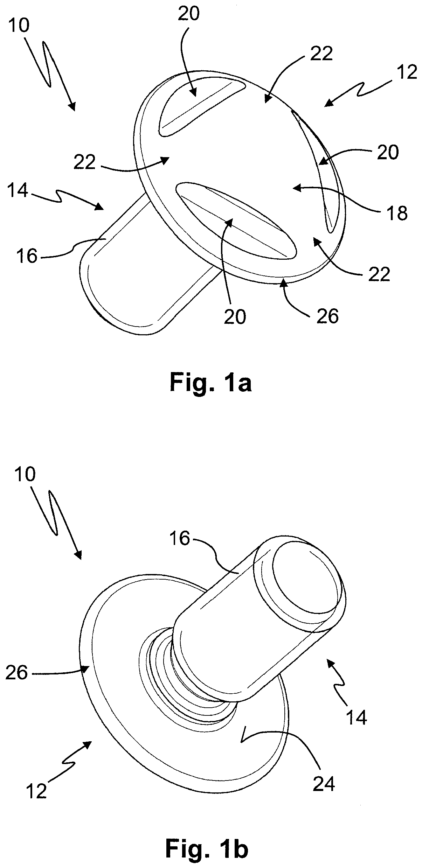

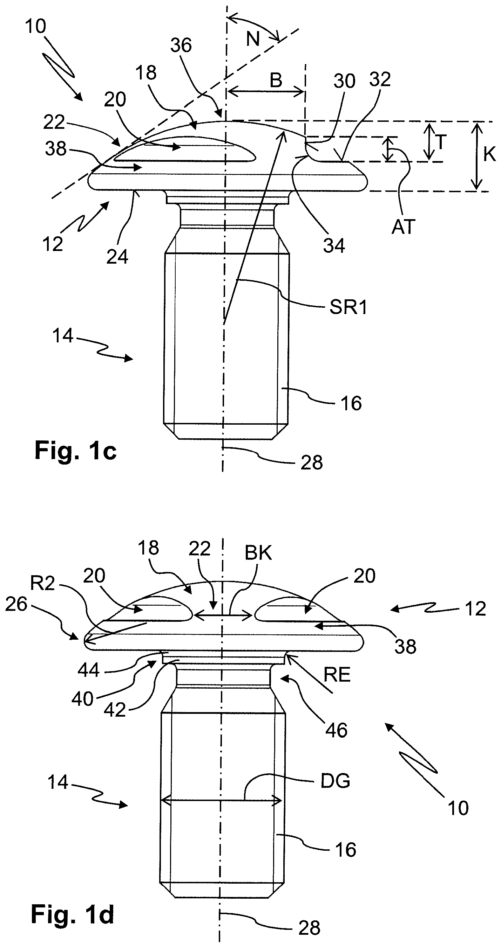

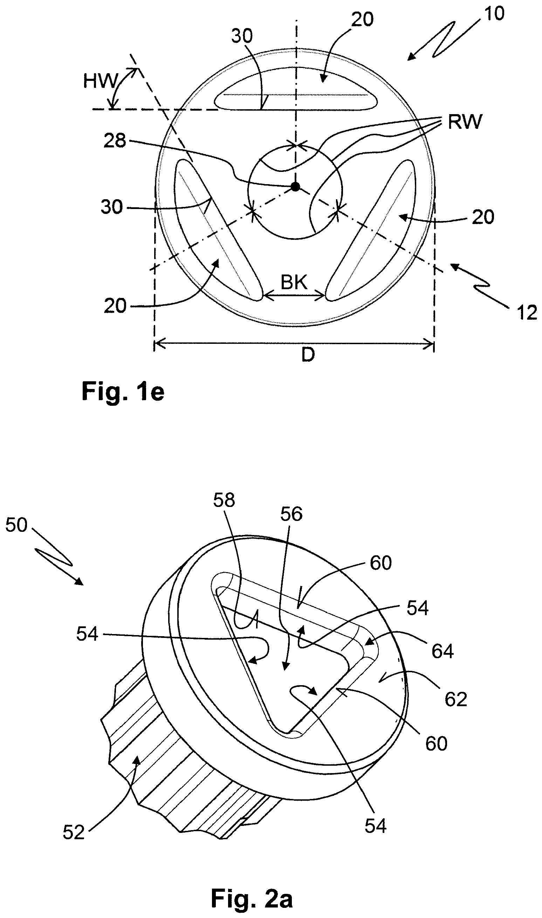

Die **Fig. 1a** zeigt eine Ausführungsform einer erfindungsgemäßen Schraube **10** in einer perspektivischen Ansicht. In der **Fig. 1b** ist eine weitere perspektivische Ansicht der Schraube 10 dargestellt. Die Schraube 10 umfasst einen Schraubenkopf **12** und einen Schaft **14** mit einem Gewindeabschnitt **16.** Der Schraubenkopf 12 weist von dem Schaft 14 mit dem Gewindeabschnitt 16 abgewandt eine Außenkontur in Form einer Kugelkappe **18** mit drei Rücknehmungen **20** auf. Die Rücknehmungen 20 sind jeweils durch einen dazwischenliegenden Kugelkappenabschnitt **22** voneinander getrennt. Dem Schaft 14 mit dem Gewindeabschnitt 16 zugewandt ist an dem Schraubenkopf 12 eine Auflagefläche **24** ausgebildet. Zwischen der Auflagefläche 24 und der Kugelkappe 18 ist hier ein abgerundeter Außenübergang **26** vorgesehen. Durch die flache und abgerundete Formgebung des Schraubenkopfs 12 eignet sich die Schraube 10 für Hygieneanwendungen.

Unter zusätzlicher Bezugnahme auf die **Fig. 1c-1e** wird die Schraube 10 im Folgenden detaillierter beschrieben.

Die Rücknehmungen 20 sind um Rotationswinkel **RW** von 120° um eine Längsachse **28** der Schraube 10 zueinander versetzt an dem Schraubenkopf 12 ausgebildet. Insbesondere sind alle Rücknehmungen 20 gleichartig ausgebildet, und auf einer gleichen Position entlang der Längsachse 28 angeordnet, so dass die Rücknehmungen 20 durch Rotation um die Längsachse 28 mit Vielfachen des Rotationswinkels RW=120° ineinander überführbar sind. Eine (minimale) Neigung **N** der Kugelkappenabschnitte 22 zwischen den Rücknehmungen 20 gegenüber der Längsachse 28 beträgt mehr als 45°, hier ca. 55°.

Die Rücknehmungen 20 weisen hier jeweils eine Hauptangriffsfläche **30,** eine Grundfläche **32** und eine Übergangskontur **34** zwischen der Hauptangriffsfläche 30 und der Grundfläche 32 auf. Die Hauptangriffsflächen 30 und die Grundflächen 32 sind hier jeweils plan (eben) ausgeführt. Die Hauptangriffsflächen 30 sind parallel zu der Längsachse 28 ausgerichtet. Die Grundflächen 32 verlaufen senkrecht zu der Längsachse 28. Die Übergangskontur 34 ist hier als eine Ausrundung mit einem Ausrundungsradius von mehr als 0,5 mm gestaltet. Die Hauptangriffsflächen 30 schließen jeweils paarweise Hauptangriffsebenenzwischenwinkel **HW** von 60° ein. Die Hauptangriffsflächen 30 und die Grundflächen 32 erstrecken sich jeweils bis zur Außenkontur in Form einer Kugelkappe 18 des Schraubenkopfs 12. Dadurch wird eine radial offene Ausgestaltung der Rücknehmungen 20 erreicht, die leicht zu reinigen ist.

Die Rücknehmungen 20 in der Kugelkappe 18 des Schraubenkopfs 12 sind durch die Kugelkappenabschnitte 22 voneinander getrennt, wobei die Breite **BK** der Kugelkappenabschnitte 22, d.h. der (lineare) Abstand zwischen zwei Rücknehmungen 20, hier jeweils dem 2,5-fachen einer axialen Tiefe **AT** der Rücknehmungen 20 entspricht. Die axiale Tiefe AT wird parallel zu der Längsachse 28 über die Erstreckung der Rücknehmungen 20 gemessen, d.h. hier von den Grundflächen 32 bis zu einem Übergang der Hauptangriffsflächen 30 in die Kugelkappe 18. Die Breite BK der Kugelkappenabschnitte 22 ist ferner kleiner als ein Gewindeaußendurchmesser **DG** des Gewindeabschnitts 16.

Ferner entspricht eine Kopfhöhe **K** des Schraubenkopfes 12 hier ca. dem 1,7-fachen eines axialen Abstands **T** der Grundflächen 32 von einem Scheitelpunkt **36** der Kugelkappe 18 des Schraubenkopfs 12. Der Scheitelpunkt 36 ist derjenige Punkt der Kugelkappe 18, der den größten Abstand von der Grundfläche 24 aufweist. Die Kugelkappe 18 ist typischerweise rotationssymmetrisch zu der Längsachse 28 ausgebildet, so dass der Scheitelpunkt 36 auf der Längsachse 28 liegt. Die Kopfhöhe K ist der parallel zur Längsachse 28 gemessene Abstand des Scheitelpunkts 36 von der Auflagefläche 24. Die Auflagefläche 24 ist hier plan ausgebildet. In alternativen Ausführungsformen kann die Auflagefläche keglig oder ballig (kugelsegmentförmig) ausgeführt sein. Die Kopfhöhe kann dann ausgehend von einem radial außen liegenden Punkt der Auflagefläche aus gemessen werden.

Der Schraubenkopf 12 weist einen Außendurchmesser **D** auf, der hier dem ca. 3,6-fachen eines radialen Abstands **B** der Hauptangriffsflächen 30 von der Längsachse 28 entspricht. Der Außendurchmesser D des Schraubenkopfs 12 entspricht hier ferner dem ca. 3,9-fachen der Kopfhöhe K. Weiterhin entspricht der Außendurchmesser D hier dem ca. 1,4-fachen eines Kappenradius **SR1** der Kugelkappe 18 des Schraubenkopfs 12. Der Kappenradius SR1 entspricht hier wiederum ca. dem 2,8-fachen der Kopfhöhe K.

Der abgerundete Außenübergang 26 zwischen der Auflagefläche 24 und der Kugelkappe 18 weist hier einen Außenübergangsradius **R2** von mehr als 0,5 mm auf. Zwischen dem abgerundeten Außenübergang 26 und den Grundflächen 32 der Rücknehmungen 20 verbleibt ein durchgängig umlaufender Kugelkappenstreifen **38.** Der Kugelkappenstreifen 38 trennt die Rücknehmungen 20 von dem Außenübergang 26 und der Grundfläche 24.

Bei den vorgenannten Größenverhältnissen nimmt der Schraubenkopf 12 besonders vorteilhafte Proportionen im Hinblick auf Verschmutzungsanfälligkeit, Reinigbarkeit und Stabilität (Festigkeit, Steifigkeit) an. Der Schraubenkopf 12 erhebt sich dabei sanft ansteigend und flach über ein zu befestigendes Bauteil. Gleichzeitig bleibt er ausreichend dick um das Bauteil sicher zu fixieren. Die Rücknehmungen 20 sind großzügig ausgerundet, so dass sich auch dort keine oder zumindest kaum Verschmutzungen ansammeln und ggf. wieder leicht entfernt werden können. Um die Eignung der Schraube 10 für den Einsatz in hygienisch sensiblen Bereichen weiter zu verbessern ist diese aus dem Edelstahl X2CrNiMo17-12-2 (1.4404) gefertigt. Eine Oberfläche des Schraubenkopfs 12, d.h. die Kugelkappe 18 mitsamt den Kugelkappenabschnitten 22 und den Kugelkappenstreifen 38 sowie den Rücknehmungen 20, der Außenübergang 26 und die Auflagefläche 24 sind auf Hochglanz poliert und weisen einen Mittenrauwert Ra von hier weniger als 0,2 µm auf, so dass Verschmutzungen kaum anhaften und leicht zu entfernen sind.

Dem Schaft 14 mit dem Gewindeabschnitt 16 zuweisend ist an der Auflagefläche 24 des Schraubenkopfs 12 konzentrisch zu der Längsachse 28 ein Bund **40** ausgebildet. Der Bund 40 umfasst einen Zylinderabschnitt **42** und einen abgerundeten Innenübergang **44.** Der Innenübergang 44 weist einen Innenübergangsradius RE von mehr als 0,2 mm auf. Der Zylinderabschnitt 42 ist näherungsweise durchmessergleich (plus/minus 3 %) zu dem Gewindeabschnitt 16 ausgeführt. Zwischen dem Bund 40 und dem Gewindeabschnitt 16 ist ein Freistich **46** an dem Schaft 14 angebracht.

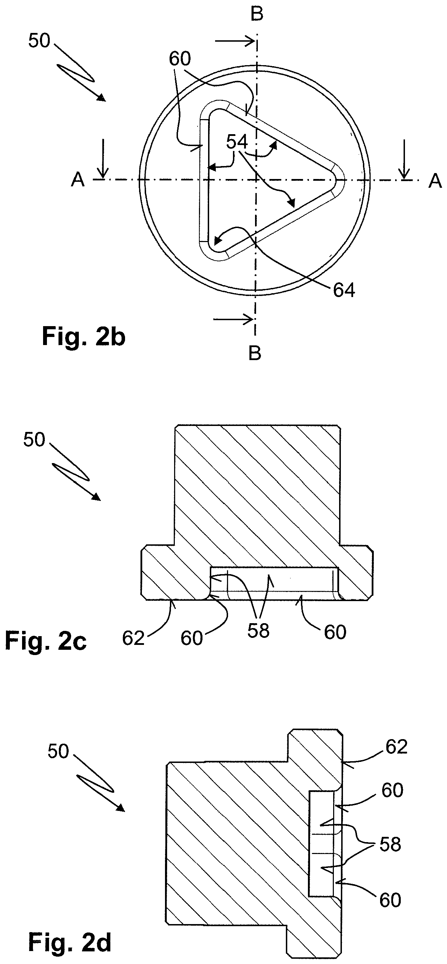

In den **Fig. 2a-2d** ist ein Werkzeug **50** für die erfindungsgemäße Schraube 10 nach den Fig. 1a-1e dargestellt. Das Werkzeug 50 und die Schraube 10 bilden gemeinsam ein erfindungsgemäßes Montagesystem. Das Werkzeug 50 ist hier als ein Schoneinsatz für einen an und für sich bekannten Ringschlüssel (nicht dargestellt) ausgebildet. Zur Aufnahme in dem Ringschlüssel weist das Werkzeug 50 ein Vielzahnprofil **52** auf.

Zum Zusammenwirken mit den Rücknehmungen 20 der Schraube 10 weist das Werkzeug 50 drei Abtriebskonturen **54** auf. Die Abtriebskonturen 54 sind korrespondierend (gegengleich) zu den Rücknehmungen 20 der Schraube 10 ausgebildet. Nur ein Spezialwerkzeug wie das in Fig. 2a-2d gezeigte Spezialwerkzeug erlaubt eine Betätigung der Schraube 10. Die Schraube 10 ist daher vor unbefugter Betätigung, insbesondere unbefugtem Lösen, geschützt.

Die Abtriebskonturen 54 begrenzen hier eine Ausnehmung **56** des Werkzeugs 50. Die Kugelkappe 18 der Schraube 10 wird teilweise in der Ausnehmung 56 aufgenommen, wenn das Werkzeug 50 auf den Schraubenkopf 12 aufgesetzt ist.

Die Abtriebskonturen 54 umfassen hier je eine Hauptabtriebsfläche **58** zum Zusammenwirken mit einer der Hauptangriffsflächen 30 sowie eine Anschlusskontur **60** zum Zusammenwirken mit einer der Übergangskonturen 34. Die Anschlusskonturen 60 des Werkzeugs sind hier wie die Übergangskonturen 34 der Schraube 10 abgerundet ausgeführt. Ein Abrundungsradius der Anschlusskonturen 60 entspricht dem Ausrundungsradius der Übergangskonturen 34 der zugehörigen Schraube 10.

Die Anschlusskonturen 60 bilden hier einen Übergang in eine Bodenkontur **62** des Werkzeugs 50. Die Bodenkontur 62 ist hier eine plane Fläche. Im auf die Schraube 10 aufgesetzten Zustand liegt die Bodenkontur 62 des Werkzeugs 50 an den Grundflächen 32 der Rücknehmungen 20 der Schraube 10 an. Die Hauptabtriebsflächen 58 und die Anschlusskonturen 60 liegen dann gleichsam an den Hauptangriffsflächen 30 und den Übergangskonturen 34 an, so dass eine großflächige Lasteinleitung von dem Werkzeug 50 in die Schraube 10 erfolgen kann. Dadurch wird die Schraube 10 beim Festziehen bzw. Lösen der Schraube 10 weniger stark beansprucht, so dass die hochlglanzpolierte Oberfläche des Schraubenkopfs 12 nicht beschädigt wird.

Die Abtriebskonturen 54 des Werkzeugs 50 sind hier so weit nach außen geführt, d.h. so lang ausgebildet, dass sie in Eckausrundungen **64** zusammengeführt werden können. Im auf die Schraube 10 aufgesetzten Zustand des Werkzeugs 50 sind die Eckausrundungen 64 von den Kugelkappenabschnitten 22 beabstandet angeordnet, ohne den Schraubenkopf 12 zu berühren. Die Abtriebskonturen 54 sind mithin jeweils länger ausgebildet als die Rücknehmungen 20 der zugehörigen Schraube 10. Die Rücknehmungen 20, insbesondere deren Hauptantriebsflächen 30 und die Übergangskonturen 34, liegen (näherungsweise) vollflächig an den Abtriebskonturen 54 des Werkzeugs 50 an. Demgegenüber verbleiben die Abtriebskonturen 54 nahe den Eckausrundungen 64 ohne Kontakt zu den Rücknehmungen 20 der Schraube 10.

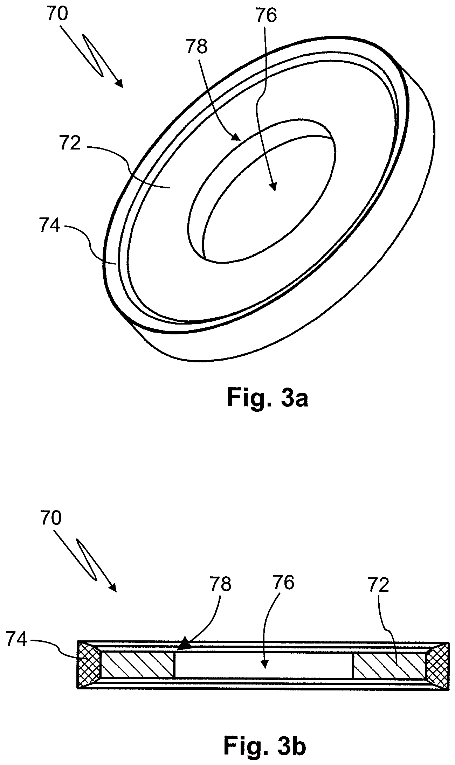

Die **Fig. 3a, 3b** zeigen eine Dichtscheibe **70** für die in den Fig. 1a-1e dargestellte erfindungsgemäße Schraube 10. Die Dichtscheibe 70 und die Schraube 10 bilden zusammen ein erfindungsgemäßes Befestigungssystem. Die Dichtscheibe 70 umfasst eine radial innen liegende Tragscheibe **72** und einen radial außen liegenden Dichtkörper **74.** Die Tragscheibe 72 besteht hier aus einem metallischen Werkstoff, nämlich Edelstahl. Alternativ kann die Tragscheibe 72 aus einem harten Kunststoff, insbesondere einem faserverstärkten Kunststoff gefertigt werden. Der Dichtkörper 74 ist aus einem Elastomer gefertigt. Die Tragscheibe 72 weist eine zentrale Durchgangsausnehmung **76** auf. Der Schaft 14 der Schraube 10 kann durch die Durchgangsausnehmung 76 geführt werden. Wenn die Dichtscheibe 70 gegen die Auflagefläche 24 der Schraube 10 gedrückt wird, kann die Dichtscheibe 70 durch den Bund 40 relativ zu dem Schraubenkopf 12 zentriert werden. Zur Zentrierung liegt hier der Innenübergang 44 des Bundes 40 an einer Kante **78** der Durchgangsausnehmung 76 an, so dass die Zentrierung allein oder vorrangig über den Innenübergang 44 erfolgt. Hierzu werden die Tragscheibe 72 im Bereich der Kante 78 und/oder der Innenübergang 44 beim Anziehen der Schraube 10 deformiert, insbesondere elastisch deformiert.

Alternativ kann die Kante 78 der Tragscheibe 72 korrespondierend zu dem Innenübergang 44 abgerundet sein, so dass die Kante 78 und der Innenübergang 44 flächig aneinander anliegen (nicht dargestellt). In einer weiteren Alternative kann ein Durchmesser der Durchgangsausnehmung 76 geringfügig größer (etwa um eine doppelte radiale Breite des Innenübergangs 44) sein als ein Durchmesser des Zylinderabschnitts 42, wobei ein radiales Spiel zwischen der Tragscheibe 76 und dem Bund 44 beim Anziehen der Schraube 10 durch Anlage der Kante 78 am äußeren Rand des Innenübergangs 44 aufgehoben wird (nicht dargestellt). Alternativ zur Zentrierung über den Innenübergang 44 kann zum Zentrieren der Dichtscheibe 70 eine Passung zwischen der Durchgangsausnehmung 76 und dem Zylinderabschnitt 42 des Bundes 40 eingerichtet sein, indem die Durchgangsausnehmung 76 durchmessergleich zu dem Zylinderabschnitt 42 ausgebildet ist; die Kante 78 der Tragscheibe 72 ist dann gegenüber dem Innenübergang 44 zurückgenommen, z. B. stärker abgerundet (nicht dargestellt).

Der Dichtkörper 74 erweitert die Tragscheibe 72 nach radial außen hin. Im entspannten Zustand weitet sich der Dichtkörper 74 nach radial außen hin in axialer Richtung auf. Im entspannten Zustand ist der Dichtkörper 74 zumindest an seinem radial äußeren Ende dicker ist als die Tragscheibe 72. Radial innen kann der Dichtkörper 74 gleich dick wie die Tragscheibe 72 sein. Der Dichtkörper 74 weist hier also einen im Wesentlichen trapezförmigen Querschnitt auf.

Wenn die Dichtscheibe 70 gegen die Auflagefläche 24 der Schraube 10 gedrückt wird, legt sich der Dichtkörper 74 an dem abgerundeten Außenübergang 26 an. Der Dichtkörper 74 kann einen glatten (spaltfreien und stufenlosen) Übergang von dem Schraubenkopf 12 zu einem zu befestigenden Bauteil (nicht dargestellt) vermitteln. Der Dichtkörper 74 verhindert das Eindringen von Verschmutzungen zwischen den Schraubenkopf 12 und das Bauteil. Mit dem erfindungsgemäßen Befestigungssystem wird eine hygienisch sichere Schraubverbindung erhalten, die vor unbefugter Betätigung geschützt ist.

### Bezugszeichenliste

Schraube **10**
Schraubenkopf **12**
Schaft **14**
Gewindeabschnitt **16**
Kugelkappe **18**
Rücknehmungen **20**
Kugelkappenabschnitt **22**
Auflagefläche **24**
Außenübergang **26**
Längsachse **28**
Hauptangriffsfläche **30**
Grundfläche **32**
Übergangskontur **34**
Scheitelpunkt **36**
Kugelkappenstreifen **38**
Bund **40**
Zylinderabschnitt **42**
Innenübergang **44**
Freistich **46**
Werkzeug **50**
Vielzahnprofil **52**
Abtriebskontur **54**
Ausnehmung **56**
Hauptabtriebsfläche **58**
Anschlusskontur **60**
Bodenkontur **62**
Dichtscheibe **70**
Tragscheibe **72**
Dichtkörper **74**
Durchgangsausnehmung **76**
Kante **78**
radialer Abstand **B**
Außendurchmesser **D**
Gewindeaußendurchmesser **DG**
Hauptangriffsebenenzwischenwinkel **HW**
Kopfhöhe **K**
Neigung **N**
Rotationswinkel **RW**
Außenübergangsradius **R2**
Kappenradius **SR1**
axialer Abstand **T**

## Patentansprüche

1. Schraube (10) für Hygieneanwendungen mit einem Schraubenkopf (12) und mit einem Schaft (14), der einen Gewindeabschnitt (16) trägt,
wobei der Schraubenkopf (12) eine Auflagefläche (24) aufweist, die dem Gewindeabschnitt (16) zugewandt ist, und
wobei der Schraubenkopf (12) von dem Gewindeabschnitt (16) abgewandt eine Außenkontur in Form einer Kugelkappe (18) mit mehreren Rücknehmungen (20) aufweist
wobei eine Oberfläche des Schraubenkopfs (12) einen Mittenrauwert Ra von höchstens 0,8 µm aufweist,
wobei der Schraubenkopf (12) genau drei dieser Rücknehmungen (20) aufweist, wobei die Rücknehmungen (20) um 120° zueinander rotiert bezüglich einer Längsachse (28) der Schraube (10) angeordnet sind, und
wobei gegenüber einer jeden der Rücknehmungen (20) jeweils ein Kugelkappenabschnitt (22) verbleibt, der die beiden anderen Rücknehmungen (20) in Umfangsrichtung voneinander trennt, wobei eine Neigung (N) des Kugelkappenabschnitts (22) zwischen besagten beiden anderen Rücknehmungen (20) gegenüber der Längsachse (28) jeweils wenigstens 45° beträgt,
wobei die Rücknehmungen (20) mit je einer Hauptangriffsfläche (30), die parallel zu der Längsachse (28) ausgerichtet ist, weiterhin mit je einer Grundfläche (32) und mit je einer Übergangskontur (34) zwischen der Hauptangriffsfläche (30) und der Grundfläche (32) ausgebildet sind, wobei die Übergangskontur (34) abgerundet ausgebildet ist,
wobei zwischen der Auflagefläche (24) und der Kugelkappe (18) ein abgerundeter Außenübergang (26) ausgebildet ist, wobei zwischen dem abgerundeten Außenübergang (26) und den Rücknehmungen (20) ein durchgängig umlaufender Kugelkappenstreifen (38) ausgebildet ist,
und wobei die Hauptangriffsflächen (30) eben ausgebildet sind und jeweils paarweise einen Hauptangriffsebenenzwischenwinkel (HW) von 60° einschließen,
wobei die Hauptangriffsflächen (30) und die Grundflächen (32) sich jeweils bis zur Außenkontur in Form einer Kugelkappe (18) des Schraubenkopfs (12) erstrecken.

2. Schraube (10) nach Anspruch 1, **dadurch gekennzeichnet, dass** die Grundflächen (32) eben ausgebildet sind und senkrecht zur Längsachse (28) verlaufen.

3. Schraube (10) nach Anspruch 1 oder 2, **dadurch gekennzeichnet, dass** eine Kopfhöhe (K) des Schraubenkopfs (12) wenigstens dem 1,3-fachen, bevorzugt wenigstens dem 1,4-fachen, und höchstens 2,2-fachen, bevorzugt höchstens dem Doppelten, eines axialen Abstands (T) der Grundflächen (32) von einem Scheitelpunkt (36) der Kugelkappe (18) entspricht.

4. Schraube (10) nach einem der vorhergehenden Ansprüche, **dadurch gekennzeichnet, dass** eine Breite (BK) des Kugelkappenabschnitts (22) zwischen den Rücknehmungen (20) wenigstens einer axialen Tiefe (AT) der Rücknehmungen (20) entspricht.

5. Schraube (10) nach einem der vorhergehenden Ansprüche, **dadurch gekennzeichnet, dass** ein Außendurchmesser (D) des Schraubenkopfs (12) wenigstens dem Dreifachen, bevorzugt wenigstens dem 3,5-fachen, und höchstens dem 4,5-fachen, bevorzugt höchstens dem Vierfachen eines radialen Abstands (B) der Rücknehmungen (20) von der Längsachse (28) entspricht.

6. Schraube (10) nach einem der vorhergehenden Ansprüche, **dadurch gekennzeichnet, dass** ein Außendurchmesser (D) des Schraubenkopfs (12) wenigstens dem Dreifachen, bevorzugt wenigstens dem 3,5-fachen und höchstens dem 4,5-fachen, bevorzugt höchstens dem Vierfachen einer Kopfhöhe (K) des Schraubenkopfs (12) entspricht.

7. Schraube (10) nach einem der vorhergehenden Ansprüche, **dadurch gekennzeichnet, dass** ein Außendurchmesser (D) des Schraubenkopfs (12) wenigstens dem 1,2-fachen, bevorzugt wenigstens dem 1,3-fachen und höchstens dem 1,7-fachen, bevorzugt höchstens dem 1,6-fachen, besonders bevorzugt höchstens dem 1,5-fachen eines Kappenradius (SR1) der Kugelkappe (18) entspricht.

8. Schraube (10) nach einem der vorhergehenden Ansprüche, **dadurch gekennzeichnet, dass** ein Kappenradius (SR1) der Kugelkappe (18) wenigstens dem Doppelten, bevorzugt wenigstens dem 2,5-fachen, und höchstens dem 3,5-fachen, bevorzugt höchstens dem Dreifachen, einer Kopfhöhe (K) des Schraubenkopfs (12) entspricht.

9. Schraube (10) nach einem der vorhergehenden Ansprüche, **dadurch gekennzeichnet, dass** zwischen der Auflagefläche (24) und der Kugelkappe (18) der abgerundeter Außenübergang (26) mit einem Außenübergangsradius (R2) ausgebildet ist, wobei ein Kappenradius (SR1) der Kugelkappe (18) wenigstens dem 14-fachen, bevorzugt wenigstens dem 16-fachen, und höchstens dem 22-fachen, bevorzugt höchstens dem 20-fachen, des Außenübergangsradius (R2) entspricht.

10. Schraube (10) nach einem der vorhergehenden Ansprüche, **dadurch gekennzeichnet, dass** an der Auflagefläche (24) ein Bund (40) an dem Schraubenkopf (12) ausgebildet ist, der einen zu der Längsachse (28) konzentrischen Zylinderabschnitt (42) und einen abgerundeten Innenübergang (44) zwischen dem Zylinderabschnitt (42) und der Auflagefläche (24) aufweist, insbesondere mit einem Innenübergangsradius (RE) von wenigstens 0,2 mm.

11. Schraube (10) nach Anspruch 10, **dadurch gekennzeichnet, dass** zwischen dem Bund (40) und dem Gewindeabschnitt (16) ein Freistich (46) an dem Schaft (14) ausgebildet ist.

12. Schraube (10) nach einem der vorhergehenden Ansprüche, **dadurch gekennzeichnet, dass** die Oberfläche des Schraubenkopfs (12) einen Mittenrauwert Ra von von höchstens 0,4 µm, bevorzugt von höchstens 0,1 µm, aufweist.

13. Schraube (10) nach einem der vorhergehenden Ansprüche, **dadurch gekennzeichnet, dass** die Schraube (10) aus einem rostfreien Edelstahl, bevorzugt einem austenitischen rostfreien Edelstahl, besonders bevorzugt X2CrNiMo17-12-2 (Werkstoffnummer 1.4404), gefertigt ist.

14. Montagesystem umfassend eine Schraube (10) und ein Werkzeug (50) für die Schraube (10), **dadurch gekennzeichnet, dass** die Schraube (10) nach einem der Ansprüche 1, 2 oder 3 ausgebildet ist, dass das Werkzeug (50) drei zu den Rücknehmungen (20) korrespondierende Abtriebskonturen (54) aufweist mit je einer Hauptabtriebsfläche (56) und mit je einer Anschlusskontur (60), insbesondere wobei die Anschlusskontur (60) jeweils einen Übergang in je eine Bodenkontur (62) des Werkzeugs (50) vermittelt, und dass die Anschlusskonturen (60) des Werkzeugs (50) jeweils gleichartig zu den Übergangskonturen (34) der Schraube (10) ausgebildet sind.

15. Befestigungssystem umfassend eine Schraube (10) nach Anspruch 10 oder 11 und eine Dichtscheibe (70) zur Anlage an der Auflagefläche (24) des Schraubenkopfs (12) , wobei die Dichtscheibe (70) eine radial innen liegende Tragscheibe (72) und einen radial außen liegenden umlaufenden Dichtkörper (74) aus einem Elastomer aufweist, wobei sich der Dichtkörper (74) im entspannten Zustand nach radial außen hin in axialer Richtung aufweitet, und wobei der Dichtkörper (74) zumindest an seinem radial äußeren Ende dicker ist als die Tragscheibe (72), und wobei die Tragscheibe (72) eine zentrale Durchgangsausnehmung (76) aufweist, die korrespondierend zu dem Bund (40) der Schraube (10) ausgebildet ist, so dass beim Andrücken der Tragscheibe (72) gegen die Auflagefläche (24) der Schraube (10) die Dichtscheibe (70) relativ zu dem Schraubenkopf (12) zentriert wird, insbesondere durch Anlage der zentralen Durchgangsausnehmung (76) der Tragscheibe (72) an dem Innenübergang (44) der Schraube (10).

## Claims

1. Screw (10) for hygienic applications, comprising a screw head (12) and a shaft (14) which supports a threaded portion (16), wherein the screw head (12) has a bearing surface (24) that faces the threaded portion (16), and
wherein the screw head (12) has an outer contour facing away from the threaded portion (16) in the form of a spherical cap (18) having a plurality of recesses (20),
wherein a surface of the screw head (12) has an average roughness Ra of at most 0.8 µm,
wherein the screw head (12) has precisely three of these recesses (20), wherein the recesses (20) are arranged so as to be rotated by 120° relative to one another with respect to a longitudinal axis (28) of the screw (10), and
wherein, opposite each of the recesses (20), there remains a spherical cap portion (22) that separates the other two recesses (20) from one another in the circumferential direction, wherein an inclination (N) of the spherical cap portion (22) between said other two recesses (20) is at least 45° with respect to the longitudinal axis (28) in each case,
wherein the recesses (20) are each formed with a main contact surface (30) which is aligned parallel to the longitudinal axis (28), a base surface (32), and a transition contour (34) between the main contact surface (30) the base surface (32), wherein the transition contour (34) is rounded,
wherein a rounded outer transition (26) is formed between the bearing surface (24) and the spherical cap (18), wherein a continuously peripheral spherical cap strip (38) is formed between the rounded outer transition (26) and the recesses (20),
and wherein the main contact surfaces (30) are planar and each pair encloses a main contact plane intermediate angle (HW) of 60°,
wherein the main contact surfaces (30) and the base surfaces (32) each extend up to the outer contour in the form of a spherical cap (18) of the screw head (12).

2. Screw (10) according to claim 1, **characterized in that** the base surfaces (32) are planar and extend perpendicularly to the longitudinal axis (28).

3. Screw (10) according to either claim 1 or claim 2, **characterized in that** a head height (K) of the screw head (12) corresponds to at least 1.3 times, preferably at least 1.4 times, and at most 2.2 times, preferably at most double, an axial distance (T) of the base surfaces (32) from an apex (36) of the spherical cap (18).

4. Screw (10) according to any of the preceding claims, **characterized in that** a width (BK) of the spherical cap portion (22) between the recesses (20) corresponds to at least one axial depth (AT) of the recesses (20).

5. Screw (10) according to any of the preceding claims, **characterized in that** an outer diameter (D) of the screw head (12) corresponds to at least three times, preferably at least 3.5 times, and at most 4.5 times, preferably at most four times, a radial distance (B) of the recesses (20) from the longitudinal axis (28).

6. Screw (10) according to any of the preceding claims, **characterized in that** an outer diameter (D) of the screw head (12) corresponds to at least three times, preferably at least 3.5 times, and at most 4.5 times, preferably at most four times, a head height (K) of the screw head (12).

7. Screw (10) according to any of the preceding claims, **characterized in that** an outer diameter (D) of the screw head (12) corresponds to at least 1.2 times, preferably at least 1.3 times, and at most 1.7 times, preferably at most 1.6 times, particularly preferably at most 1.5 times, a cap radius (SR1) of the spherical cap (18).

8. Screw (10) according to any of the preceding claims, **characterized in that** a cap radius (SR1) of the spherical cap (18) corresponds to at least double, preferably at least 2.5 times, and at most 3.5 times, preferably at most three times, a head height (K) of the screw head (12).

9. Screw (10) according to any of the preceding claims, **characterized in that** the rounded outer transition (26) is formed between the bearing surface (24) and the spherical cap (18) with an outer transition radius (R2), a cap radius (SR1) of the spherical cap (18) corresponding to at least 14 times, preferably at least 16 times, and at most 22 times, preferably at most 20 times, the outer transition radius (R2).

10. Screw (10) according to any of the preceding claims, **characterized in that** a collar (40) is formed on the bearing surface (24) on the screw head (12), which collar (40) has a cylinder portion (42) concentric to the longitudinal axis (28) and a rounded inner transition (44) between the cylinder portion (42) and the bearing surface (24), in particular having an inner transition radius (RE) of at least 0.2 mm.

11. Screw (10) according to claim 10, **characterized in that** an undercut (46) is formed on the shaft (14) between the collar (40) and the threaded portion (16).

12. Screw (10) according to any of the preceding claims, **characterized in that** the surface of the screw head (12) has an average roughness Ra of at most 0.4 µm, preferably of at most 0.1 µm.

13. Screw (10) according to any of the preceding claims, **characterized in that** the screw (10) is made of a rustproof stainless steel, preferably an austenitic rustproof stainless steel, particularly preferably X2CrNiMo17-12-2 (material number 1.4404).

14. Mounting system comprising a screw (10) and a tool (50) for the screw (10), **characterized in that** the screw (10) is designed according to any of claims 1, 2 or 3, **in that** the tool (50) has three output contours (54) that correspond to the recesses (20), each of said output contours (54) having a main output surface (56) and a connection contour (60), each connection contour (60) in particular providing a transition into respective base contours (62) of the tool (50), and **in that** the connection contours (60) of the tool (50) are each designed in the same way as the transition contours (34) of the screw (10).

15. Fastening system comprising a screw (10) according to either claim 10 or claim 11 and a sealing washer (70) for bearing on the bearing surface (24) of the screw head (12), wherein the sealing washer (70) has a radially inner support washer (72) and a radially outer circumferential sealing body (74) made of an elastomer, wherein the sealing body (74) expands radially outward in the axial direction in the relaxed state, and wherein the sealing body (74), at least at the radially outer end thereof, is thicker than the support washer (72), and wherein the support washer (72) has a central through-cavity (76) which is designed to correspond to the collar (40) of the screw (10) such that, when the support washer (72) is pressed against the bearing surface (24) of the screw (10), the sealing washer (70) is centered relative to the screw head (12), in particular by the central through-cavity (76) of the support washer (72) bearing against the inner transition (44) of the screw (10).

## Revendications

1. Vis (10) destinée à des applications hygiéniques, comprenant une tête (12) et une tige (14) portant une région filetée (16),
la tête (12) de ladite vis comportant une surface d'appui (24) tournée vers ladite région filetée (16), et
ladite tête (12) de la vis étant munie d'un profil extérieur qui pointe à l'opposé de ladite région filetée (16) et revêt la forme d'une calotte sphérique (18) dotée de plusieurs zones (20) en retrait,
sachant qu'une surface de la tête (12) de la vis présente une valeur Ra de rugosité moyenne de 0,8 µm au maximum,
sachant que ladite tête (12) de la vis compte exactement trois zones (20) en retrait du type précité, lesquelles zones (20) en retrait sont agencées selon une rotation mutuelle de 120° par rapport à un axe longitudinal (28) de la vis (10), et
sachant qu'il subsiste à chaque fois, vis-à-vis de chacune desdites zones (20) en retrait, un tronçon (22) de calotte sphérique qui sépare mutuellement les deux autres zones (20) en retrait, dans la direction périphérique, une inclinaison (N) dudit tronçon (22) de calotte sphérique mesurant à chaque fois, entre lesdites deux autres zones (20) en retrait, au moins 45° par rapport à l'axe longitudinal (28),
sachant que lesdites zones (20) en retrait sont pourvues d'une surface principale respective (30) de venue en prise, qui est orientée parallèlement audit axe longitudinal (28), en outre d'une surface de base (32) respective, et d'un profil respectif de transition (34), entre ladite surface principale (30) de venue en prise et ladite surface de base (32), lequel profil de transition (34) est de réalisation arrondie,
une transition extérieure arrondie (26) étant ménagée entre la surface d'appui (24) et la calotte sphérique (18), sachant qu'un segment (38) de calotte sphérique, s'étendant d'un trait sur la circonférence, est façonné entre ladite transition extérieure arrondie (26) et les zones (20) en retrait,
et sachant que les surfaces principales (30) de venue en prise sont de réalisation plane et décrivent à chaque fois, par paires, un angle (HW) de 60° entre les plans principaux de venue en prise,
lesdites surfaces principales (30) de venue en prise et les surfaces de base (32) s'étendant, à chaque fois, jusqu'au profil extérieur revêtant la forme d'une calotte sphérique (18) de la tête (12) de la vis.

2. Vis (10) selon la revendication 1, **caractérisée par le fait que** les surfaces de base (32) sont de réalisation plane et s'étendent perpendiculairement à l'axe longitudinal (28).

3. Vis (10) selon la revendication 1 ou 2, **caractérisée par le fait qu'**une hauteur (K) de la tête (12) de ladite vis correspond à au moins 1,3 fois, de préférence à au moins 1,4 fois, au maximum à 2,2 fois et préférentiellement, au maximum, au double d'une distance axiale (T) comprise entre les surfaces de base (32) et un point sommital (36) de la calotte sphérique (18).

4. Vis (10) selon l'une des revendications précédentes, **caractérisée par le fait qu'**une largeur (BK) du tronçon (22) de calotte sphérique, entre les zones (20) en retrait, correspond au moins à une profondeur axiale (AT) desdites zones (20) en retrait.

5. Vis (10) selon l'une des revendications précédentes, **caractérisée par le fait qu'**un diamètre extérieur (D) de la tête (12) de ladite vis correspond au moins au triple, de préférence à au moins 3,5 fois, au maximum à 4,5 fois et préférentiellement, au maximum, au quadruple d'une distance radiale (B) comprise entre les zones (20) en retrait et l'axe longitudinal (28).

6. Vis (10) selon l'une des revendications précédentes, **caractérisée par le fait qu'**un diamètre extérieur (D) de la tête (12) de ladite vis correspond au moins au triple, de préférence à au moins 3,5 fois, au maximum à 4,5 fois et préférentiellement, au maximum, au quadruple d'une hauteur (K) de ladite tête (12) de la vis.

7. Vis (10) selon l'une des revendications précédentes, **caractérisée par le fait qu'**un diamètre extérieur (D) de la tête (12) de ladite vis correspond à au moins 1,2 fois, de préférence à au moins 1,3 fois, au maximum à 1,7 fois, préférentiellement au maximum à 1,6 fois et, avec préférence particulière, au maximum à 1,5 fois un rayon (SR1) de la calotte sphérique (18).

8. Vis (10) selon l'une des revendications précédentes, **caractérisée par le fait qu'**un rayon (SR1) de la calotte sphérique (18) correspond au moins au double, de préférence à au moins 2,5 fois, au maximum à 3,5 fois et préférentiellement, au maximum, au triple d'une hauteur (K) de la tête (12) de ladite vis.

9. Vis (10) selon l'une des revendications précédentes, **caractérisée par le fait que** la transition extérieure arrondie (26) est pourvue d'un rayon (R2) entre la surface d'appui (24) et la calotte sphérique (18), sachant qu'un rayon (SR1) de ladite calotte sphérique (18) correspond à au moins 14 fois, de préférence à au moins 16 fois, au maximum à 22 fois et préférentiellement, au maximum, à 20 fois ledit rayon (R2) de la transition extérieure.

10. Vis (10) selon l'une des revendications précédentes, **caractérisée par le fait qu'**un collet (40), façonné sur la tête (12) de ladite vis au niveau de la surface d'appui (24), comprend une région cylindrique (42) concentrique à l'axe longitudinal (28) et, entre ladite région cylindrique (42) et ladite surface d'appui (24), une transition intérieure arrondie (44) présentant, en particulier, un rayon (RE) d'au moins 0,2 mm.

11. Vis (10) selon la revendication 10, **caractérisée par le fait qu'**une dépouille (46) est pratiquée, sur la tige (14), entre le collet (40) et la région filetée (16).

12. Vis (10) selon l'une des revendications précédentes, **caractérisée par le fait que** la surface de la tête (12) de ladite vis présente une valeur Ra de rugosité moyenne de 0,4 µm au maximum, préférentiellement de 0,1 µm au maximum.

13. Vis (10) selon l'une des revendications précédentes, **caractérisée par le fait que** ladite vis (10) est fabriquée en un acier spécial inoxydable, de préférence en un acier spécial inoxydable austénitique, en X2CrNiMo17-12-2 (numéro de matériau 1.4404) avec préférence particulière.

14. Système de montage incluant une vis (10) et un outil (50) dédié à ladite vis (10), **caractérisé par le fait que** ladite vis (10) est réalisée conformément à l'une des revendications 1, 2 ou 3 ; **par le fait que** l'outil (50) comprend trois profils (54) de prise de force concordant avec les zones (20) en retrait, munis d'une surface principale respective (56) de prise de force et d'un profil respectif de rattachement (60), sachant notamment que ledit profil de rattachement (60) procure, à chaque fois, une transition avec un profil inférieur respectif (62) dudit outil (50) ; et **par le fait que** les profils de rattachement (60) dudit outil (50) présentent, à chaque fois, une réalisation offrant une similitude avec celle des profils de transition (34) de la vis (10).

15. Système de fixation incluant une vis (10) conforme à la revendication 10 ou 11, et une rondelle d'étanchement (70) conçue pour venir en applique sur la surface d'appui (24) de la tête (12) de ladite vis, ladite rondelle d'étanchement (70) comprenant un disque de support (72) situé radialement à l'intérieur et un corps périphérique d'étanchement (74) en un élastomère, situé radialement à l'extérieur, lequel corps d'étanchement (74) s'élargit radialement vers l'extérieur dans la direction axiale, à l'état détendu, sachant que ledit corps d'étanchement (74) présente, au moins au niveau de son extrémité radialement extérieure, une épaisseur supérieure à celle dudit disque de support (72), lequel disque de support (72) comporte un évidement central de passage (76) réalisé pour concorder avec le collet (40) de la vis (10), de façon telle que la rondelle d'étanchement (70) soit centrée par rapport à la tête (12) de la vis lorsque ledit disque de support (72) est pressé contre la surface d'appui (24) de ladite vis (10), notamment par venue en applique dudit évidement central de passage (76) du disque de support (72) sur la transition intérieure (44) de ladite vis (10).
